# EUROPEAN PATENT APPLICATION

(11) **EP 2 413 555 A2**
(43) Date of publication of application: **01.02.2012**
(21) Application number: 11165444.8
(22) Date of filing: 10.05.2011
(51) Int. Cl.: H04L 27/06, H04L 27/20

(54) **Apparatus and method for cross phase modulation recovery**

(30) Priority: 29.07.2010 CN 201010243765
(71) Applicant: FUJITSU LIMITED, Kawasaki-shi, Kanagawa 211-8588 (JP)
(72) Inventor: Yan, Weizhen, 100025, Beijing (CN); Tao, Zhenning, 100025, Beijing (CN)
(74) Representative: HOFFMANN EITLE

(57) **Abstract**

Apparatus and method for cross phase modulation recovery are disclosed. An apparatus for cross phase modulation recovery may include M stages of cross phase modulation recovering devices connected in cascade, wherein M≥2, and each stage of the M-stages of cross phase modulation recovering devices is configured to perform cross phase modulation recovery to a polarization de-multiplexed signal input into the each stage. An optical coherent receiver including such an apparatus for cross phase modulation recovery is also disclosed.

## Description

### TECHNICAL FIELD

The present disclosure relates to the field of optical communications, and more particularly, to an apparatus and method for cross phase modulation recovery and an optical coherent receiver including such an apparatus.

### BACKGROUND

Cross Phase Modulation (XPM) induced phase noise and polarization crosstalk have been considered as a major obstacle of an optical communication system, particularly a Dense Wavelength Division Multiplexing system. In some coherent optical communication systems, carrier phase recovery devices are used in coherent receivers to compensate nonlinear phase noise, and the relevant documents include, for example, the following: Lei LI et al., "XPM Tolerant Adaptive Carrier Phase Recovery for Coherent Receiver Based on Phase Noise Statistics Monitoring" (ECOC 2009, Paper P3.16) (hereinafter referred to as Relevant Document 1) and D. Van Den Borne et al., "Carrier Phase Estimation for Coherent Equalization of 43-Gbls POLMUX-NRZ-DQPSK transmission with 10.7-Gb/s NRZ Neighbours" (ECOC 2007, Paper We3.2.2) (hereinafter referred to as Relevant Document 2). In some other coherent optical communication systems, nonlinear polarization crosstalk cancellers are used to cancel nonlinear polarization crosstalk, and the relevant document includes, for example, Lei LI et al., "Nonlinear Polarization Crosstalk Canceller for Dual-Polarization Digital Coherent Receivers" (ECOC 2010, Paper OWE3) (hereinafter referred to as Relevant Document 3).

### SUMMARY

Some embodiments of the present disclosure provide an apparatus and method for cross phase modulation recovery which are capable of effectively canceling the XPM-induced distortions which include for example the carrier phase noise and the nonlinear polarization crosstalk.

The following presents a simplified summary of the disclosure in order to provide a basic understanding of some aspects of the disclosure. This summary is not an exhaustive overview of the disclosure. It is not intended to identify key or critical elements of the disclosure or to delineate the scope of the disclosure. Its sole purpose is to present some concepts in a simplified form as a prelude to the more detailed description that is discussed later.

According to an aspect of the disclosure, an apparatus for cross phase modulation recovery is provided, which may include M stages of cross phase modulation recovering devices connected in cascade. M≥2, and each stage of the M-stages of cross phase modulation recovering devices is configured to perform cross phase modulation recovery to a polarization de-multiplexed signal input into the each stage.

According to another aspect of the disclosure, a method for cross phase modulation recovery is provided, which may include performing cross phase modulation recovery to a polarization de-multiplexed signal a plurality of times continuously. The number of times of performing the cross phase modulation recovery to the polarization de-multiplexed signal is larger than or equal to 2.

According to another aspect of the disclosure, an optical coherent receiver is provided. The optical coherent receiver may include an equalization and polarization de-multiplexing device and a data recovery device, and may further include the above mentioned apparatus for cross phase modulation recovery. The apparatus for cross phase modulation recovery is configured to perform cross phase modulation recovery to a de-multiplexed signal output from the equalization and polarization de-multiplexing device and output the recovered signal to the data recovery device.

Another aspect of the disclosure provides a computer executable program which may be used to realize the above method for cross phase modulation recovery.

Another aspect of the disclosure provides a machine-readable medium having machine-readable program code embodied therein for realizing the above method for cross phase modulation recovery.

### BRIEF DESCRIPTION OF THE DRAWINGS

The above and other objects, features and advantages of the embodiments of the disclosure can be better understood with reference to the description given below in conjunction with the accompanying drawings, throughout which identical or like components are denoted by identical or like reference signs. It should be noted that the components shown in the drawings are illustrated in a simplified manner, rather than being plotted in proportion. In the drawings:

Figure 1 is a schematic block diagram illustrating the structure of an apparatus for cross phase modulation recovery according to an embodiment of the disclosure;

Figure 2A is a schematic block diagram illustrating the structure of an apparatus for cross phase modulation recovery according to another embodiment of the disclosure;

Figure 2B is a schematic block diagram illustrating the structure of a single XPMR as shown in Figure 2A;

Figure 3 is a schematic block diagram illustrating the structure of a coherent optical receiver according to an embodiment of the disclosure;

Figure 4 is a schematic block diagram illustrating an example of a frequency offset frequency offset compensator according to the embodiment of the disclosure;

Figure 5 is a schematic block diagram illustrating another example of a frequency offset frequency offset compensator according to the embodiment of the disclosure;

Figure 6 is a schematic block diagram illustrating another example of a frequency offset frequency offset compensator according to the embodiment of the disclosure;

Figure 7 is a schematic diagram showing the difference between the performances of different apparatuses for cross phase modulation recovery;

Figure 8 is a schematic flow chart illustrating a method for cross phase modulation recovery according to an embodiment of the disclosure;

Figure 9 is a schematic flow chart illustrating a method for cross phase modulation recovery according to another embodiment of the disclosure; and

Figure 10 is a schematic block diagram illustrating the structure of a computer for realizing the methods according to embodiments/examples of the disclosure.

### DESCRIPTION OF EMBODIMENTS

The embodiments of the present disclosure will be described in conjunction with the accompanying drawings hereinafter. It should be noted that the elements and/or features shown in a drawing or disclosed in an embodiments may be combined with the elements and/or features shown in one or more other drawing or embodiments. It should be further noted that only device structures and/or processing steps closely relevant to the solutions of the disclosure will be illustrated in the drawings while omitting other details less relevant to the disclosure or well known in the art for the sake of clarity and conciseness.

In some optical communication systems as described above the carrier phase recovery is performed on the assumption that the polarization crosstalk can be neglected, and in some other optical communication systems the nonlinear polarization crosstalk cancellation is performed on the assumption that the carrier phase noise can be neglected. The inventors of the disclosure recognized that, in real optical communication systems the XPM-induced carrier phase noise and polarization crosstalk always co-exist in the received signals, which stands against the above assumptions. The carrier phase recovery performed with the polarization crosstalk neglected can not realize a desired phase recovery, since the existing polarization crosstalk significantly reduces the accuracy of the phase estimation and thus enlarges the residual phase noise in the signal thus recovered. The residual phase noise will also degrade the effect of the polarization crosstalk cancellation. The polarization crosstalk cancellation performed with the carrier phase noise neglected can not realize a desired polarization crosstalk cancellation, either, since the existing carrier phase noise significantly reduces the calculation accuracy of the polarization crosstalk.

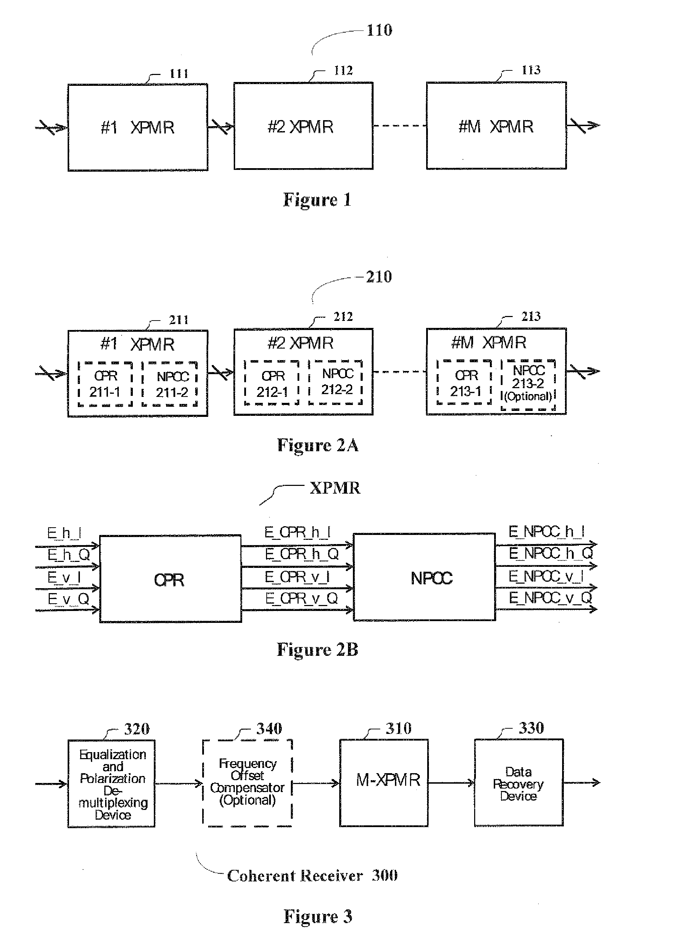

Figure 1 is a schematic block diagram illustrating the structure of a cross phase modulation recovery apparatus according to an embodiment of the disclosure. As shown in Figure 1, the cross phase modulation recovery apparatus 110 includes M stages of cross phase modulation recovering devices (hereinafter referred to as XPMRs). The XPMRs are connected in cascade. In the figure, the 1^{st} stage of XPMR (i.e. #1 XPMR) is denoted by reference number 111, the 2^{nd} stage of XPMR (i.e. #2 XPMR) is denoted by reference number 112, and the Mth stage of XPMR (i.e. #M XPMR) is denoted by reference number 113. The 1^{st} stage XPMR 111 is configured to receive a polarization de-multiplexed base-band signal input into the apparatus 110 and perform cross phase modulation recovery to the base-band signal. The 2^{nd} stage XPMR 112 is configured to receive the signal output by the 1^{st} stage XPMR 111 and perform cross phase modulation recovery again to the signal which has been compensated by the 1^{st} stage XPMR 111. Likewise, the Mth stage XPMR 113 is configured to receive the signal output by the last stage XPMR (i.e. the (M-1)th stage XPMR) and perform cross phase modulation recovery again to the signal which has been compensated by the last stage XPMR. In the embodiment, M may be an integer which is larger than or equal to 2.

In the cross phase modulation recovery apparatus 110 (hereinafter the apparatus may be referred to as "M-XPMR") as shown in Figure 1, multi-stages of XPMRs are connected in cascade so that multiple of times of cross phase modulation recovery are performed to the received signal. With such an M-XPMR, the XPM-induced distortions in the signal may be compensated more effectively, compared with a conventional apparatus performing one of carrier phase recovery or nonlinear polarization crosstalk canceling or a conventional apparatus performing XPM recovery only once.

As an example, the multiple stages of XPMRs (e.g. 111, 112, and 113) in the cross phase modulation recovery apparatus 110 according to the embodiment each may have the same configuration. As another example, the configurations of the XPMRs (e.g. 111, 112, and 113) may be different from each other.

It should be understood that each stage of XPMR may employ any appropriate XPM recovery method or technology, the description of which is omitted herein.

Figure 2A is a schematic block diagram illustrating the structure of a cross phase modulation recovery apparatus according to another embodiment of the disclosure.

Similar to the apparatus 110 in Figure 1, the apparatus 210 shown in Figure 2A includes M stages of XPMRs, which are denoted by 211, 212, and 213, respectively. In the embodiment, M is also an integer larger than or equal to 2. The difference lies in that, in the apparatus 210 of Figure 2A each stage of XPMR includes a carrier phase recovering device (abbreviated as CPR) and a polarization crosstalk canceller (or nonlinear polarization crosstalk canceller, abbreviated as NPCC). As shown in Figure 2A, the 1^{st} stage XPMR (#1 XPMR) 211 may include a carrier phase recovering device 211-1 and a polarization crosstalk canceller 211-2. The inputs of the carrier phase recovering device 211-1 are used as the inputs of the apparatus 210 and are used to receive a polarization de-multiplexed base-band signal. The polarization crosstalk canceller 211-2 is configured to receive the signal processed by the carrier phase recovering device 211-1. The 2^{nd} stage XPMR (#2 XPMR) 212 may include a carrier phase recovering device 212-1 and a polarization crosstalk canceller 212-2. The carrier phase recovering device 212-1 is configure to receive the signal processed by the last stage of XPMR (i.e. #1 XPMR), and the polarization crosstalk canceller 212-2 is configured to receive the signal processed by the carrier phase recovering device 212-1. Likewise, the Mth stage XPMR (#M XPMR) 213 may include a carrier phase recovering device 213-1 and a polarization crosstalk canceller 213-2. The carrier phase recovering device 213-1 is configure to receive the signal processed by the last stage of XPMR (i.e. the (M-1)th stage of XPMR), and the polarization crosstalk canceller 213-2 is configured to receive the signal processed by the carrier phase recovering device 213-1. The outputs of the polarization crosstalk canceller 213-2 may be used as the outputs of the apparatus 210.

Figure 2B illustrates the structure of a single XPMR as shown in Figure 2A. As shown, a single XPMR may include a carrier phase recovering device (CPR) and a polarization crosstalk canceller (NPCC). The symbols such as E_h_I, E_h_Q, E_v_I, and E_v_Q respectively represents the components of the signal input into the CPR; and the symbols such as E_CPR_h_I, E_CPR_h_Q, E_CPR_v_I, and E_CPR_v_Q respectively represents the components of the signal processed by the CPR; and the symbols such as E_NPCC_h_I, E_NPCC_h_Q, E_NPCC_v_I, and E_NPCC_v_Q respectively represents the components of the signal processed by the NPCC.

Each CPR (e.g. those denoted by 211-1, 212-1, 213-1, etc.) is configured to perform carrier phase recovery to the signal input thereto, and each NPCC (e.g. those denoted by 211-2, 212-2, 213-2, etc.) is configured to cancel the polarization crosstalk from the signal input thereto.

The CPR or NPCC may employ any appropriate carrier phase recovery or polarization crosstalk cancellation method or technology, for example, the methods described in the Relevant Documents 1-3 or any other appropriate methods, which will not be defined herein.

As can be seen from Figure 2A, in the apparatus 210 a plurality of carrier phase recovering devices and a plurality of polarization crosstalk cancellers are alternately connected in series, thus forming a cascade structure in which the carrier phase recovering devices and the polarization crosstalk cancellers alternate with each other. In such a structure, the polarization crosstalk contained in the signal input into each CPR (such as those denoted by 212-1, 213-1, etc.) of each stage from the second stage is suppressed by the NPCC of the last stage, and therefore the accuracy of phase estimation performed by the each CPR can be significantly improved. In addition, for each NPCC, since the carrier phase noise in the signal input thereto has been suppressed to a certain degree by the preceding CPR, the effect of the nonlinear polarization crosstalk cancellation performed by the each NPCC will also be improved. Therefore, the apparatus 210 is capable of alternately performing carrier phase recovery and polarization crosstalk cancellation to the polarization de-multiplexed signal a plurality of times by using the cascade structure, thereby effectively reducing the carrier phase noise and polarization crosstalk in the signal and significantly improving the effect of the cross phase modulation recovery performed by the apparatus.

In an example, in the last stage XPMR the polarization crosstalk canceller may be omitted. For instance, the polarization crosstalk canceller 213-2 in the Mth XPMR as shown in Figure 2A is optional. This means that the alternate cascade structure shown in Figure 2A may begin with a CPR and end with another CPR. This reduces the complexity of the cross phase modulation recovery apparatus 210 and therefore the complexity of the receiver.

As an example, the configurations of the XPMRs 211, 212, and 213 in the M-XPMR 210 shown in Figure 2A may be the same with each other. Here, the configuration parameters of each XPMR may include the average lengths of the CPR and NPCC therein. Particularly, the CPRs 211-1, 212-1, and 213-1 may have the same configuration, i.e. the same average length; and the NPCC 211-2, 212-2, and 213-2 also may have the same configuration, i.e. the same average length.

As another example, the configurations of the XPMRs 211, 212, and 213 in the M-XPMR 210 shown in Figure 2A may be different from each other. Particularly, the CPRs 211-1, 212-1, and 213-1 of the XPMRs may have different configurations, e.g. different average lengths. For instance, after the processing of the 1^{st} stage of XPMR, the nonlinear polarization crosstalk and carrier phase noise in the signal are suppressed to a certain degree, therefore the average length of the CPR in the 2^{nd} stage may be configured shorter than that of the 1^{st} stage, that is, the average lengths of the CPRs 211-1, 212-1, 213-1 may be descending stage by stage. Such a cascade structure with descending average lengths may further reduce the complexity of the apparatus while obtaining a better performance. In this example, the average lengths of the NPCC 211-2, 212-2, and 213-2 in the stages may be the same, or may be different from each other.

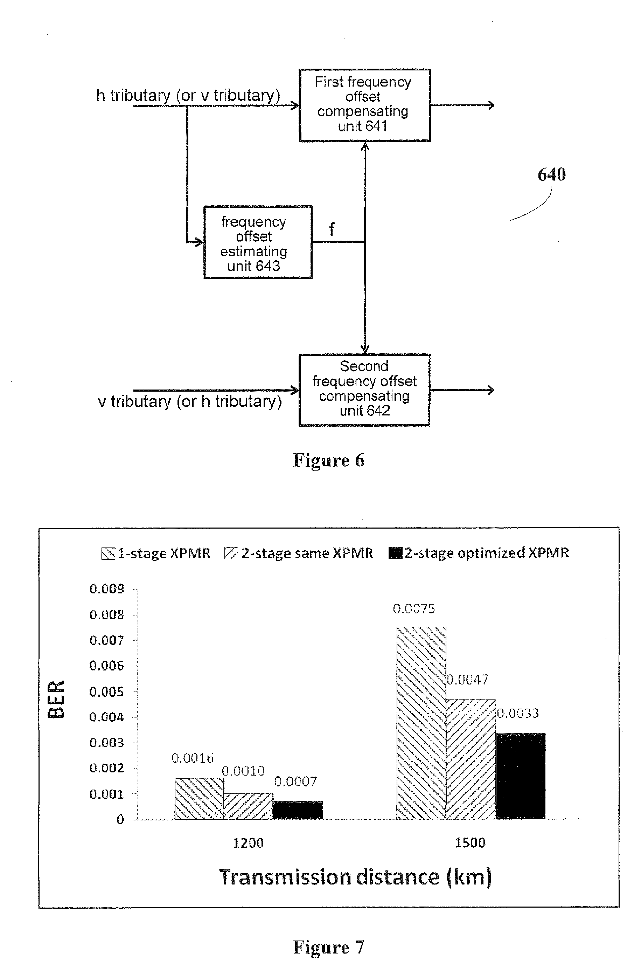

Figure 7 illustrates the performances of different cross phase modulation recovery apparatuses. As shown in Figure 7, under the same transmission distance, the bit error rate (BER) of the signal processed by a single XPMR is of the highest value, the BER of the signal processed by two stags of XPMRs having the same configurations is of the second highest value, and the BER of the signal processed by two stages of XPMRs having optimized configurations (i.e. the average lengths of the CPRs in the two stages are descending) has the lowest value. In other words, the performance of the M-XPMR in which the average lengths of the CPRs are descending stage by stage is the best, the performance of the M-XPMR in which each stage of XPMR has the same configuration is the second best, and the performance of the single XPMR is the worst. As can be seen, the performance of the M-XPMR is much better than that of a single XPMR.

The cross phase modulation recovery apparatus shown in the above embodiments/examples may be applied in a coherent receiver of an optical communication system. Figure 3 is a schematic block diagram illustrating the structure of a coherent optical receiver 300 according to an embodiment of the disclosure.

As shown in Figure 3, the coherent receiver 300 may include an equalization and polarization de-multiplexing device 320 and a data recovery device 330, and may further include a cross phase modulation recovery apparatus 310. The equalization and polarization de-multiplexing device 320 is configured to perform equalization and polarization de-multiplexing to the received signal. The equalization and polarization de-multiplexing device 320 may be realized by any appropriate technology, the description of which is omitted herein.

The cross phase modulation recovery apparatus 310 is configured to perform cross phase modulation recovery to a de-multiplexed signal output from the equalization and polarization de-multiplexing device 320, and output the compensated signal to the data recovery device 330. The cross phase modulation recovery apparatus 310 may utilize the structure of the apparatus 110/210 in the above embodiments/examples, the description of which is not repeated herein.

The data recovery device 330 is configured to perform data recovery to the compensated signal output by the apparatus 310. The data recovery device 330 may employ any appropriate data recovery technology according to actual requirements, for example, it may utilize a hard decision device or a soft decision FEC (Forward Error Correction) decoder or the like, the description of which is omitted herein.

The receiver as shown in Figure 3 employs the M-XPMR according to the embodiments of the disclosure, therefore the cross phase modulation induced distortions in the received signal can be effectively compensated. Thus, the performance of such a receiver is significantly improved than that of a conventional receiver without the M-XPMR according to the embodiments of the disclosure.

As an example, the coherent receiver 300 may further include a frequency offset frequency offset compensator 340. The frequency offset frequency offset compensator 340 is configured to compensate the frequency offset in the de-multiplexed signal output from the equalization and polarization de-multiplexing device 320 and output the frequency offset compensated signal to the cross phase modulation recovery apparatus 310. In the case that the frequency offset between the received signal light and the local light is large, the coherent receiver 300 may utilize the frequency offset frequency offset compensator 340 to compensate the offset; while when the frequency offset between the received signal light and the local light is small, the coherent receiver 300 may not include the frequency offset frequency offset compensator 340.

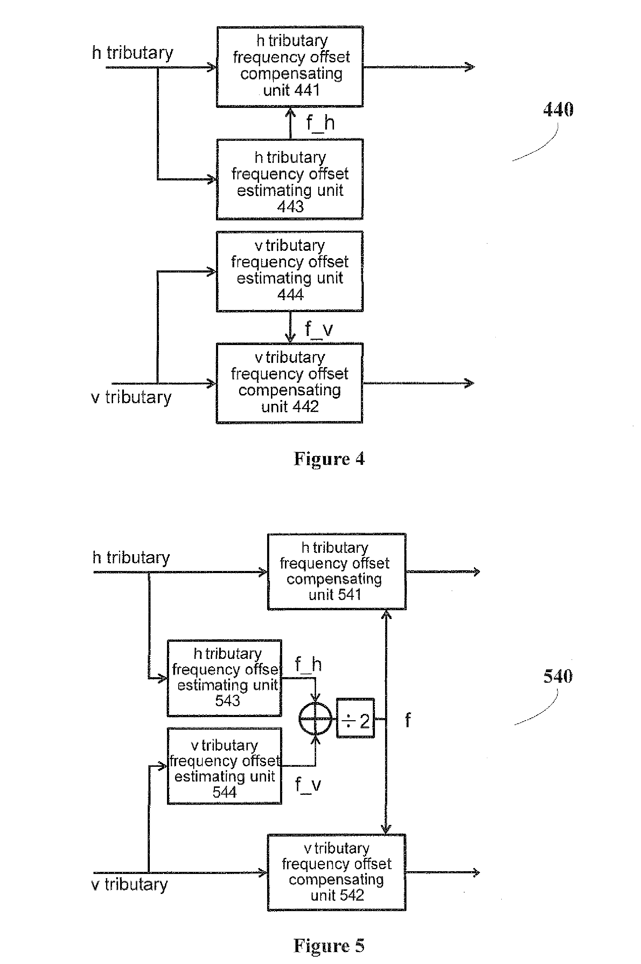

Figures 4, 5, and 6 each illustrate an example of the frequency offset frequency offset compensator.

As shown in Figure 4, the frequency offset compensator 440 may estimate the frequency offsets of both h tributary and v tributary of the de-multiplexed signal output from the equalization and polarization de-multiplexing device, respectively, and compensate the frequency offsets of the h tributary and the v tributary by using the two estimated frequency offset values independently. Particularly, the frequency offset compensator 440 may include an h tributary frequency offset compensating unit 441, a v tributary frequency offset compensating unit 442, an h tributary frequency offset estimating unit 443, and a v tributary frequency offset estimating unit 444. The h tributary frequency offset estimating unit 443 is configured to estimate the frequency offset of the h tributary signal and output the estimated frequency offset of the h tributary signal to the h tributary frequency offset compensating unit 441 which compensates the frequency offset of the h tributary signal based on the estimated offset value. The v tributary frequency offset estimating unit 444 is configured to estimate the frequency offset of the v tributary signal and output the estimated frequency offset of the v tributary signal to the v tributary frequency offset compensating unit 442 which compensates the frequency offset of the v tributary signal based on the estimated offset value.

As shown in Figure 5, the frequency offset compensator 540 may estimate the frequency offsets of both h tributary and v tributary of the de-multiplexed signal output from the equalization and polarization de-multiplexing device, respectively, calculate the mean value of the two frequency offsets, and compensate the frequency offsets of the h tributary and the v tributary by using the mean value. Particularly, the frequency offset compensator 540 may include an h tributary frequency offset compensating unit 541, a v tributary frequency offset compensating unit 542, an h tributary frequency offset estimating unit 543, and a v tributary frequency offset estimating unit 544. The h tributary frequency offset estimating unit 543 is configured to estimate the frequency offset of the h tributary signal, and the v tributary frequency offset estimating unit 544 is configured to estimate the frequency offset of the v tributary signal. The two estimated frequency offset values are added and averaged to obtain an average value of the frequency offsets. The average value is output to the h tributary frequency offset compensating unit 541 and the v tributary frequency offset compensating unit 542. Then the h tributary frequency offset compensating unit 541 and the v tributary frequency offset compensating unit 542 compensate the frequency offsets of the h and v tributary signals respectively by using the same average value.

As shown in Figure 6, the frequency offset compensator 640 may estimate the frequency offset of either one of the h tributary and v tributary of the de-multiplexed signal, and compensate the frequency offsets of the h tributary and the v tributary by using the estimated value. Particularly, the frequency offset compensator 640 may include a first tributary frequency offset compensating unit 641, a second tributary frequency offset compensating unit 642, and a frequency offset estimating unit 643. The frequency offset estimating unit 643 is configured to estimate the frequency offset of either one of the h and v tributary signals, and output the estimated offset value to the two compensating units 641 and 642. The two compensating units 641 and 642 then compensate the frequency offsets of the h and v tributary signals respectively by using the same estimated frequency offset value.

The frequency offset compensator 340/440/540/640 is capable of compensating the frequency offset of the received signal and thus can improve the effect of the cross phase modulation recovery carried out in the receiver, thereby further improving the performance of the receiver.

It should be appreciated that the M-XPMR 110/210/301 as described in the above embodiments/examples may be applied in the coherent receiver of a wavelength-division multiplexing (WDM) coherent optical communication system, particularly, a dense wavelength-division multiplexing (DWDM) coherent optical communication system, to perform the cross phase modulation recovery. The coherent receiver including the M-XPMR may be utilized in various polarization multiplexing systems, such as DP-mPSK (Dual Polarization m-ray Phase Shift Keying DP-QAM (Dual Polarization-Quadrature Amplitude Modulation), mPoISK (m-ary Polarization Shift Keying), or the like, and should not be limited to any particular modulation modes.

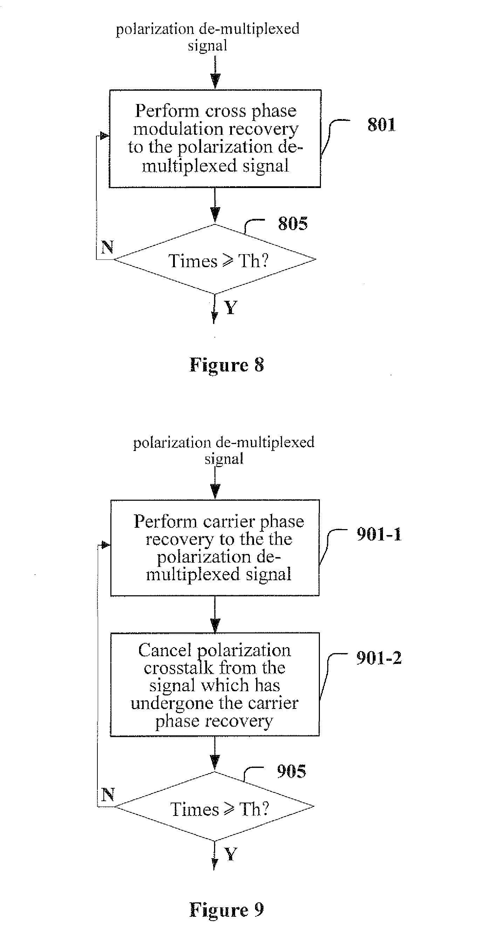

Figure 8 is a schematic flow chart illustrating a method for cross phase modulation recovery according to an embodiment of the disclosure. As shown in Figure 8, the method may include steps 801 and 805. In step 801, cross phase modulation recovery is performed to a polarization de-multiplexed signal. In step 805, it is judged whether the number of times of performing cross phase modulation recovery exceeds a predefined threshold Th, if no, the processing returns to step 801 so as to perform cross phase modulation recovery to the signal once again. If the number of times exceeds the threshold Th, the signal is output to the following process (for example, the following data recovery). The threshold Th may be an integer larger than or equal to 2, the value of which may be selected or predefined as actually required.

In addition, any appropriate cross phase modulation recovery technology may be employed, the description of which is omitted herein.

In the method as shown in Figure 8, the polarization de-multiplexed signal is subject to cross phase modulation recovery a plurality of times. With such a method, the XPM-induced distortions in the signal may be compensated more effectively, compared with a conventional method performing one of carrier phase recovery or nonlinear polarization crosstalk canceling or a conventional method performing XPM recovery only once. The method as shown in Figure 8 may be realized using the apparatus described above with reference to Figure 1 or 2A or 2B.

Figure 9 illustrates an example of the method for cross phase modulation recovery according to the embodiment of the disclosure. As a particular example of the method shown in Figure 8, the method of Figure 9 includes two steps 901-1 and 901-2 alternately carried out to perform carrier phase recovery and polarization crosstalk cancellation alternately to the signal. Particularly, in step 901-1 carrier phase recovery is performed to a polarization de-multiplexed signal; and in step 901-2 polarization crosstalk canceling is performed to the signal which has undergone the carrier phase recovery. In step 905, it is judged whether the number of times of alternately performing carrier phase recovery and polarization crosstalk cancellation exceeds a predefined threshold Th, if no, the processing returns to step 901-1 so as to perform carrier phase recovery to the signal once again. If the number of times exceeds the threshold Th, the signal is output to the following process (for example, the following data recovery). Similar to Figure 8, the threshold Th may be an integer larger than or equal to 2, the value of which may be selected or predefined as actually required.

Any appropriate carrier phase recovery and polarization crosstalk cancellation technologies, for example, the methods described in the Relevant Documents 1-3 or any other appropriate methods may be used, which will not be defined herein.

In the method shown in Figure 9, carrier phase recovery and polarization crosstalk cancellation are alternately performed a plurality of times. With the method, the carrier phase noise and polarization crosstalk in the received signal can be effectively reduced and the effect of the cross phase modulation recovery can be significantly improved. The method shown in Figure 9 can be realized by using the apparatus 210 as shown in Figure 2A.

It should be understood that the above embodiments and examples are illustrative, rather than exhaustive. The present disclosure should not be regarded as being limited to any particular embodiments or examples stated above.

The components, units or steps in the above apparatuses and methods can be configured with software, hardware, firmware or any combination thereof, by using method or means well known in the art, the details of which are omitted herein.

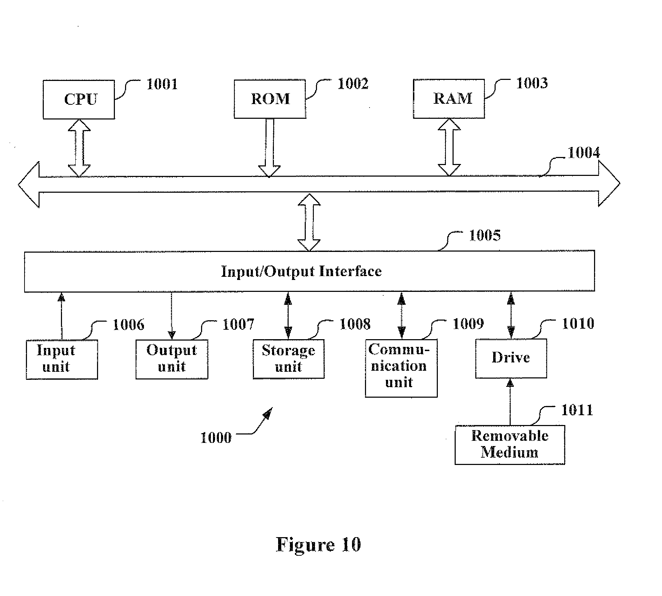

As an example, in the case of using software or firmware, programs constituting the software for realizing the above method or apparatus can be installed to a computer with a specialized hardware structure (e.g. the general purposed computer as shown in Figure 10) from a storage medium or a network. The computer, when installed with various programs, is capable of carrying out various functions.

In Figure. 10, a central processing unit (CPU) 1001 executes various types of processing in accordance with programs stored in a read-only memory (ROM) 1002, or programs loaded from a storage unit 1008 into a random access memory (RAM) 1003. The RAM 1003 also stores the data required for the CPU 1001 to execute various types of processing, as required. The CPU 1001, the ROM 1002, and the RAM 1003 are connected to one another through a bus 1004. The bus 1004 also connects to an input/output interface 1005.

The input/output interface 1005 connects to an input unit 1006 composed of a keyboard, a mouse, etc., an output unit 1007 composed of a cathode ray tube or a liquid crystal display, a speaker, etc., the storage unit 1008, which includes a hard disk, and a communication unit 1009 composed of a modem, a terminal adapter, etc. The communication unit 1009 performs communicating processing. A drive 1010 is connected to the input/output interface 1005, if needed. In the drive 1010, for example, removable media 1011 is loaded as a recording medium containing a program of the present invention. The program is read from the removable media 1011 and is installed into the storage unit 1008, as required.

In the case of using software to realize the above consecutive processing, the programs constituting the software may be installed from a network such as Internet or a storage medium such as the removable media 1011.

Those skilled in the art should understand the storage medium is not limited to the removable media 1011, such as, a magnetic disk (including flexible disc), an optical disc (including compact-disc ROM (CD-ROM) and digital versatile disk (DVD)), an magneto-optical disc (including an MD (Mini-Disc) (registered trademark)), or a semiconductor memory, in which the program is recorded and which are distributed to deliver the program to the user aside from a main body of a device, or the ROM 1002 or the hard disc involved in the storage unit 1008, where the program is recorded and which are previously mounted on the main body of the device and delivered to the user.

The present disclosure further provides a program product having machine-readable instruction codes which, when being executed, may carry out the method for cross phase modulation recovery according to the embodiments.

Accordingly, the storage medium for bearing the program product having the machine-readable instruction codes is also included in the disclosure. The storage medium includes but not limited to a flexible disk, an optical disc, a magneto-optical disc, a storage card, or a memory stick, or the like.

In the above description of the embodiments, features described or shown with respect to one embodiment may be used in one or more other embodiments in a similar or same manner, or may be combined with the features of the other embodiments, or may be used to replace the features of the other embodiments.

As used herein, the terms the terms "comprise," "include," "have" and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Further, in the disclosure the methods are not limited to a process performed in temporal sequence according to the order described therein, instead, they can be executed in other temporal sequence, or be executed in parallel or separatively. That is, the executing orders described above should not be regarded as limiting the method thereto.

As can be seen from the above description, the embodiments of the present disclosure provide at least the following solutions:
Note 1. An apparatus for cross phase modulation recovery, comprising M stages of cross phase modulation recovering devices connected in cascade, where M≥2, and each stage of the M-stages of cross phase modulation recovering devices is configured to perform cross phase modulation recovery to a polarization de-multiplexed signal input into the each stage.
Note 2. The apparatus according to note 1, wherein each stage of the 1st to the (M-1)th stage of cross phase modulation recovering devices comprises a carrier phase recovering device and a polarization crosstalk canceller, and the Mth stage of cross phase modulation recovering device comprises a carrier phase recovering device, and
   wherein the polarization crosstalk canceller of each stage of the 1st to the (M-1)th stage of cross phase modulation recovering devices has an input connected to an output of the carrier phase recovering device of the each stage, and has an output connected to the carrier phase recovering device of the next stage, and
   wherein each carrier phase recovering device is configured to perform carrier phase recovery to a signal input into the each carrier phase recovering device and each polarization crosstalk canceller is configured to cancel polarization crosstalk in a signal input into the each polarization crosstalk canceller.
Note 3. The apparatus according to note 2, wherein average lengths of the carrier phase recovering devices in the M stages of cross phase modulation recovering devices decrease stage by stage.
Note 4. The apparatus according to any one of notes 1-3, wherein the Mth stage of cross phase modulation recovering device further comprises a polarization crosstalk canceller having an input connected to an output of the carrier phase recovering device of the Mth stage and having an output serving as an output of the apparatus for cross phase modulation recovery.
Note 5. The apparatus according to note 2, wherein the carrier phase recovering devices in the M stages of cross phase modulation recovering devices have the same configuration.
Note 6. The apparatus according to note 1, wherein the M stages of cross phase modulation recovering devices have configurations different from each other.
Note 7. An optical coherent receiver, comprising an equalization and polarization de-multiplexing device and a data recovery device, and further comprising an apparatus for cross phase modulation recovery according to any one of notes 1-6, where the apparatus for cross phase modulation recovery is configured to perform cross phase modulation recovery to a de-multiplexed signal output from the equalization and Polarization de-multiplexing device and output the recovered signal to the data recovery device.
Note 8. The optical coherent receiver according to note 7, further comprising a frequency offset compensator configured to compensate a frequency offset in the de-multiplexed signal output from the equalization and Polarization de-multiplexing device, and output the compensated signal to the apparatus for cross phase modulation recovery.
Note 9. The optical coherent receiver according to note 8, wherein the frequency offset compensator is further configured to estimate two frequency offset values in an h tributary and a v tributary of the de-multiplexed signal, respectively, and perform frequency offset compensation to the h tributary and the v tributary independently by using the two estimated frequency offset values.
Note 10. The optical coherent receiver according to note 8, wherein the frequency offset compensator is further configured to estimate two frequency offset values in an h tributary and a v tributary of the de-multiplexed signal, respectively, calculate an average value of the two estimated frequency offset values, and perform frequency offset compensation to the h tributary and the v tributary by using the average value, respectively.
Note 11. The optical coherent receiver according to note 8, wherein the frequency offset compensator is further configured to estimate a frequency offset value in one of an h tributary and a v tributary of the de-multiplexed signal, and perform frequency offset compensation to the h tributary and the v tributary by using the estimated frequency offset value, respectively.
Note 12. A method for cross phase modulation recovery, comprising performing cross phase modulation recovery to a polarization de-multiplexed signal a plurality of times continuously, wherein number of times of performing the cross phase modulation recovery to the polarization de-multiplexed signal is larger than or equal to 2.
Note 13. The method according to note 12, wherein performing cross phase modulation recovery to a polarization de-multiplexed signal comprises: alternately performing a carrier phase recovery and a polarization crosstalk canceling to a polarization de-multiplexed signal, wherein number of times of alternately performing the carrier phase recovery and the polarization crosstalk canceling is larger than or equal to 2.

While some embodiments and examples have been disclosed above, it should be noted that these embodiments and examples are only used to illustrate the present disclosure but not to limit the present disclosure. Various modifications, improvements and equivalents can be made by those skilled in the art without departing from the scope of the present disclosure. Such modifications, improvements and equivalents should also be regarded as being covered by the protection scope of the present disclosure.

## Claims

1. An apparatus for cross phase modulation recovery, comprising M stages of cross phase modulation recovering devices connected in cascade, where M≥2, and each stage of the M-stages of cross phase modulation recovering devices is configured to perform cross phase modulation recovery to a polarization de-multiplexed signal input into the each stage.

2. The apparatus according to claim 1, wherein each stage of the 1st to the (M-1)th stage of cross phase modulation recovering devices comprises a carrier phase recovering device and a polarization crosstalk canceller, and the Mth stage of cross phase modulation recovering device comprises a carrier phase recovering device, and
wherein the polarization crosstalk canceller of each stage of the 1st to the (M-1)th stage of cross phase modulation recovering devices has an input connected to an output of the carrier phase recovering device of the each stage, and has an output connected to the carrier phase recovering device of the next stage, and
wherein each carrier phase recovering device is configured to perform carrier phase recovery to a signal input into the each carrier phase recovering device and each polarization crosstalk canceller is configured to cancel polarization crosstalk in a signal input into the each polarization crosstalk canceller.

3. The apparatus according to claim 2, wherein average lengths of the carrier phase recovering devices in the M stages of cross phase modulation recovering devices decrease stage by stage.

4. The apparatus according to any one of claims 1-3, wherein the Mth stage of cross phase modulation recovering device further comprises a polarization crosstalk canceller having an input connected to an output of the carrier phase recovering device of the Mth stage and having an output serving as an output of the apparatus for cross phase modulation recovery.

5. The apparatus according to claim 2, wherein the carrier phase recovering devices in the M stages of cross phase modulation recovering devices have the same configuration.

6. The apparatus according to claim 1, wherein the M stages of cross phase modulation recovering devices have configurations different from each other.

7. An optical coherent receiver, comprising an equalization and polarization de-multiplexing device and a data recovery device, and further comprising an apparatus for cross phase modulation recovery according to any one of claims 1-6, where the apparatus for cross phase modulation recovery is configured to perform cross phase modulation recovery to a de-multiplexed signal output from the equalization and Polarization de-multiplexing device and output the recovered signal to the data recovery device.

8. The optical coherent receiver according to claim 7, further comprising a frequency offset compensator configured to compensate a frequency offset in the de-multiplexed signal output from the equalization and Polarization de-multiplexing device, and output the compensated signal to the apparatus for cross phase modulation recovery.

9. The optical coherent receiver according to claim 8, wherein the frequency offset compensator is further configured to estimate two frequency offset values in an h tributary and a v tributary of the de-multiplexed signal, respectively, and perform frequency offset compensation to the h tributary and the v tributary independently by using the two estimated frequency offset values.

10. The optical coherent receiver according to claim 8, wherein the frequency offset compensator is further configured to estimate two frequency offset values in an h tributary and a v tributary of the de-multiplexed signal, respectively, calculate an average value of the two estimated frequency offset values, and perform frequency offset compensation to the h tributary and the v tributary by using the average value, respectively.

11. The optical coherent receiver according to claim 8, wherein the frequency offset compensator is further configured to estimate a frequency offset value in one of an h tributary and a v tributary of the de-multiplexed signal, and perform frequency offset compensation to the h tributary and the v tributary by using the estimated frequency offset value, respectively.

12. A method for cross phase modulation recovery, comprising performing cross phase modulation recovery to a polarization de-multiplexed signal a plurality of times continuously, wherein number of times of performing the cross phase modulation recovery to the polarization de-multiplexed signal is larger than or equal to 2.

13. The method according to claim 12, wherein performing cross phase modulation recovery to a polarization de-multiplexed signal comprises: alternately performing a carrier phase recovery and a polarization crosstalk canceling to a polarization de-multiplexed signal, wherein number of times of alternately performing the carrier phase recovery and the polarization crosstalk canceling is larger than or equal to 2.
